# EUROPÄISCHE PATENTANMELDUNG

(11) **EP 4 632 852 A1**
(43) Veröffentlichungstag der Anmeldung: **15.10.2025**
(21) Anmeldenummer: 24169886.9
(22) Anmeldetag: 12.04.2024
(51) Int. Cl.: H01M 8/04007, H01M 8/04119

(54) **BEHÄLTER ZUR AUFNAHME EINES GEFRIERFÄHIGEN MEDIUMS, WASSERABSCHEIDER MIT BEHÄLTER SOWIE ANODENSYSTEM MIT WASSERABSCHEIDER**

(71) Anmelder: Robert Bosch GmbH, 70469 Stuttgart (DE)
(72) Erfinder: Hanneke, Juergen, 70499 Stuttgart (DE); Van De Werve, Jan Ruigrok, 70176 Stuttgart (DE); Hernandez Blasco, Pablo Jesus, 50019 Zaragoza (ES)

(57) **Zusammenfassung**

Die Erfindung betrifft einen Behälter (1) mit einem Speichervolumen (1.3) zur Aufnahme eines gefrierfähigen Mediums (2), umfassend
- mindestens ein Ablassventil (3, 4) zum Ablassen des Mediums (2) aus dem Behälter (1),
- eine induktive Heizeinrichtung (7) mit mindestens einer Spule (5, 6), wobei die mindestens eine Spule (5, 6) außerhalb des Speichervolumens (1.3) des Behälters (1) angeordnet und mit dem mindestens einen Ablassventil (3, 4) elektrisch in Reihe geschaltet ist.

Die Erfindung betrifft ferner einen Wasserabscheider mit einem erfindungsgemäßen Behälter sowie ein Anodensystem für ein Brennstoffzellensystem mit einem Wasserabscheider.

## Beschreibung

Die Erfindung betrifft einen Behälter zur Aufnahme eines gefrierfähigen Mediums. Bei dem Behälter kann es sich insbesondere um einen Sammelbehälter eines Wasserabscheiders handeln. Die Erfindung betrifft daher ferner einen Wasserabscheider mit einem erfindungsgemäßen Behälter. Da der Wasserabscheider insbesondere in einem Anodenkreis eines Anodensystems zur Versorgung eines Brennstoffzellenstapels mit Anodengas, in der Regel Wasserstoff, zum Einsatz gelangen kann, wird darüber hinaus ein Anodensystem mit einem erfindungsgemäßen Wasserabscheider angegeben.

Bevorzugter Anwendungsbereich der Erfindung sind Brennstoffzellensysteme, insbesondere mobile Brennstoffzellensysteme bzw. Brennstoffzellenfahrzeuge.

### Stand der Technik

Wasserstoffbasierte Brennstoffzellen wandeln Wasserstoff und Sauerstoff in elektrische Energie, Wärme und Wasser. Der Wasserstoff wird einer Anode und der Sauerstoff - in Form von Umgebungsluft - einer Kathode der Brennstoffzellen zugeführt. Die Versorgung der Anode mit Wasserstoff erfolgt über einen Anodenkreis eines Anodensystems, über welchen den Brennstoffzellen frischer Wasserstoff aus einem Tank sowie ein Rezirkulat zugeführt wird, das Restwasserstoff, Stickstoff und Wasser enthält. Denn über die Zeit reichert sich das über den Anodenkreis rezirkulierte Anodengas mit Stickstoff an, der von der Kathodenseite auf die Anodenseite diffundiert. Ferner wird von dem Anodengas Produktwasser mitgeführt, das bei der elektrochemischen Reaktion in den Brennstoffzellen entsteht.

Um eine Wasserstoffunterversorgung der Brennstoffzellen zu vermeiden, muss das Anodengas sowohl von Stickstoff als auch von Wasser befreit werden. Mit Stickstoff angereichertes Anodengas wird hierzu über ein Ventil, das sogenannte Purgeventil, abgelassen und durch frischen Wasserstoff aus dem Tank ersetzt. Im Anodengas enthaltenes Wasser wird mittels eines Wasserabscheiders entfernt, in einem Behälter des Wasserabscheiders gesammelt und bei vollem Behälter durch Öffnen eines weiteren Ventils, dem sogenannten Drainventil, aus dem Anodenkreis entfernt. Da bei vollständig entleertem Behälter auch Anodengas über das Drainventil entweicht, können Purgeventil und Drainventil auch in einem Ventil kombiniert werden.

Bei tiefen Umgebungstemperaturen kann im Behälter des Wasserabscheiders gesammeltes Wasser gefrieren und es kommt zu einer Eisbildung im Behälter, wodurch die Funktion des Drain- bzw. Purge-/Drainventils beeinträchtigt sein kann. In der Regel ist daher der Behälter des Wasserabscheiders beheizbar. Das Beheizen soll Eisbildung verhindern oder bereits gefrorenes Wasser schnell wieder auftauen. Üblicherweise werden elektrische Heizer zum Beheizen eingesetzt. Als nachteilig erweist sich dabei, dass sich die Anzahl der elektrischen Schnittstellen erhöht. Ferner erhöhen sie das Gefahrenpotential, da es im Betrieb des elektrischen Heizers zu einer Funkenbildung in einer ggf. wasserstoffhaltigen Umgebung.

Die vorliegende Erfindung ist mit der Aufgabe befasst, die vorstehend genannten Nachteile zu beseitigen oder zumindest zu reduzieren.

Zur Lösung der Aufgabe wird die Vorrichtung mit den Merkmalen des Anspruchs 1 vorgeschlagen. Vorteilhafte Weiterbildungen der Erfindung sind den Unteransprüchen zu entnehmen. Ferner werden ein Wasserabscheider sowie ein Anodensystem mit einem Wasserabscheider angegeben.

### Offenbarung der Erfindung

Vorgeschlagen wird ein Behälter mit einem Speichervolumen zur Aufnahme eines gefrierfähigen Mediums. Der Behälter umfasst:
- mindestens ein Ablassventil zum Ablassen des Mediums aus dem Behälter,
- eine induktive Heizeinrichtung mit mindestens einer Spule.

Die mindestens eine Spule ist außerhalb des Speichervolumens des Behälters angeordnet und mit dem mindestens einen Ablassventil elektrisch in Reihe geschaltet.

Durch die elektrische Reihenschaltung der mindestens einen Spule und des mindestens einen Ablassventils, das vorzugsweise ebenfalls elektrisch betätigt wird, kann die Anzahl der erforderlichen elektrischen Schnittstellen reduziert werden. Durch Einsatz einer induktiven Heizeinrichtung mit mindestens einer Spule kann Funkenbildung in einer ggf. wasserstoffhaltigen Umgebung vermieden werden. Denn die mindestens eine Spule der induktiven Heizeinrichtung ist außerhalb des Speichervolumens des Behälters angeordnet.

Gemäß einer bevorzugten Ausführungsform der Erfindung ist die mindestens eine Spule der induktiven Heizeinrichtung in einen Boden oder eine Wand des Behälters integriert. Der Behälter trennt somit die mindestens eine Spule vom im Speichervolumen aufgenommenen Medium. Ein Kontakt der mindestens einen Spule und damit des ggf. Funken auslösenden Teils der Heizeinrichtung mit dem Medium ist somit sicher ausgeschlossen. Die Integration der mindestens einen Spule in den Behälter erfolgt vorzugsweise in direkter Nähe zum mindestens einen Ablassventil. Zum einen können so die elektrischen Anschlussleitungen kurzgehalten werden. Zum anderen kann das mindestens eine Ablassventil mit Hilfe der induktiven Heizeinrichtung eisfrei gehalten werden.

Gemäß einer weiteren bevorzugten Ausführungsform der Erfindung ist die mindestens eine Spule über einen Spulenträger außen am Behälter befestigt. Der Spulenträger erleichtert die Montage und ggf. Demontage, beispielsweise für den Austausch eines defekten Bauteils der induktiven Heizeinrichtung. Zudem kann der Spulenträger als zentrales Anschlussbauteil fungieren, über das alle im oder am Behälter angeordneten, elektrischen Komponenten an eine externe Stromquelle anschließbar sind. Die im oder am Behälter angeordneten, elektrischen Komponenten können neben dem mindestens einen Ablassventil und der mindestens einen Spule zusätzlich mindestens einen Sensor, beispielsweise einen Füllstandssensor, umfassen.

Bevorzugt wirkt die mindestens eine Spule mit einem im Speichervolumen des Behälters aufgenommenen, vorzugsweise ferromagnetischen, Metallteil zusammen. Das Metallteil kann mit Hilfe der mindestens einen Spule induktiv erwärmt werden, so dass das Metallteil die Wärme an das im Speichervolumen aufgenommene Medium abgibt. Das Metallteil ist vorzugsweise eine Metallplatte, um eine möglichst große Wärmeübertragungsfläche zu schaffen und die Wärme optimal zu verteilen. Die Metallplatte kann beispielsweise auf dem Boden des Behälters angeordnet werden. Da die Metalplatte keine Funken erzeugt, kann sie im Speichervolumen angeordnet werden. Durch den direkten Kontakt der Metallplatte mit dem Medium kann dieses schneller und damit effektiver erwärmt werden.

Alternativ wird vorgeschlagen, dass die mindestens eine Spule mit mindestens einer weiteren Spule zusammenwirkt. Die mindestens eine weitere Spule ersetzt das Metallteil. Die Wärme wird dann von der mindestens einen weiteren Spule erzeugt und an das Medium im Speichervolumen abgegeben. Die Aktivierung der mindestens einen weiteren Spule erfolgt induktiv mit Hilfe der mindestens einen Spule der Heizeinrichtung, die außerhalb des Speichervolumens angeordnet ist.

Da Spulen Funken erzeugen können, hat vorzugsweise auch die mindestens eine weitere Spule keinen Kontakt zum im Speichervolumen aufgenommenen Medium. Die mindestens eine weitere Spule ist vorzugsweise in den Behälter integriert und durch den Behälter bzw. das Behältermaterial vom Medium getrennt. Alternativ oder ergänzend kann die mindestens eine weitere Spule durch eine Kapselung vom Medium getrennt sein. Die Kapselung ermöglicht die Anordnung im Speichervolumen, ohne dass die mindestens eine weitere Spule in Kontakt mit dem Medium gelangt.

In Weiterbildung der Erfindung wird vorgeschlagen, dass die induktive Heizeinrichtung mindestens ein PTC-Element umfasst. Das mindestens eine PTC-Element kann in der Funktion als Widerstandselement ein Überhitzen der Heizeinrichtung verhindern oder in der Funktion als Heizelement der Wärmeerzeugung dienen.

Gemäß einer ersten bevorzugten Ausführungsform der Erfindung sichert das mindestens eine PTC-Element die mindestens eine Spule der induktiven Heizeinrichtung vor Überhitzung und ist zusammen mit der mindestens einen Spule außerhalb des Speichervolumens des Behälters angeordnet. Beispielsweise kann das mindestens eine PTC-Element zusammen mit der mindestens einen Spule in den Boden oder in eine Wand des Behälters integriert sein. Vorteilhafterweise ist das mindestens eine PTC-Element zusammen mit der mindestens einen Spule über den Spulenträger außen am Behälter befestigt. Sollte das mindestens eine PTC-Element ausgetauscht werden müssen, beispielsweise aufgrund eines Defekts oder eines unzureichenden Überhitzungsschutzes, kann der Spulenträger einfach vom Behälter gelöst werden, um den Austausch vorzunehmen.

Gemäß einer zweiten bevorzugten Ausführungsform der Erfindung fungiert das mindestens eine PTC-Element als Heizelement und ist zusammen mit der mindestens einen weiteren Spule durch die Kapselung vom Medium getrennt. Die Kapselung ermöglicht die Anordnung des mindestens einen PTC-Elements im Speichervolumen des Behälters. Die Stromversorgung erfolgt über die Spulen der induktiven Heizeinrichtung, wobei die mindestens eine außerhalb des Speichervolumens angeordnete Spule als Senderspule und die mindestens eine weitere Spule, die zusammen mit dem PTC-Element in der Kapselung aufgenommen ist, als Empfängerspule dient.

Zur möglichst vollständigen Entleerung des Behälters, ist vorzugsweise das mindestens eine Ablassventil bodenseitig oder unmittelbar oberhalb des Bodens angeordnet. Um das mindestens eine Ablassventil eisfrei zu halten, ist vorzugsweise auch die induktive Heizeinrichtung bevorzugt bodenseitig angeordnet, idealerweise direkt am Ventileinlass oder in unmittelbarer Nähe hierzu.

Da es sich bei dem Behälter insbesondere um einen Wassersammelbehälter eines Wasserabscheiders handeln kann, wird ferner ein Wasserabscheider mit einem erfindungsgemäßen Behälter vorgeschlagen. Mit Hilfe des Wasserabscheiders kann Wasser aus einem Gasstrom abgeschieden werden, wobei es sich insbesondere um einen Anodengasstrom oder einen Luftstrom handeln kann. Im erstgenannten Fall ist der Wasserabscheider anodenseitig und im anderen Fall kathodenseitig angeordnet.

Darüber hinaus wird ein Anodensystem für ein Brennstoffzellensystem, umfassend einen erfindungsgemäßen Wasserabscheider vorgeschlagen. Der Wasserabscheider dient in diesem Fall dem Abscheiden von Produktwasser, das anodenseitig anfällt. Der Wasserabscheider ist hierzu bevorzugt in einen Anodenkreis des Anodensystems integriert, über den ein Brennstoffzellenstapel mit Anodengas, insbesondere mit Wasserstoff, versorgbar ist. Der in den Anodenkreis integrierte Wasserabscheider reduziert die anodenseitige Wasserlast.

Die Erfindung und ihre Vorteile werden nachfolgend anhand der beigefügten Zeichnungen näher beschrieben. Diese zeigen:
Fig. 1 einen Längsschnitt durch einen ersten erfindungsgemäßen Behälter,
Fig. 2 eine schematische Darstellung einer elektrischen Reihenschaltung von Ablassventil und Induktionsspule,
Fig. 3 einen Längsschnitt durch einen zweiten erfindungsgemäßen Behälter,
Fig. 4 a) einen Horizontalschnitt, b) einen Vertikalschnitt (quer) sowie c) einen Vertikalschnitt (längs) durch eine Spulenanordnung für einen erfindungsgemäßen Behälter und
Fig. 5 einen Längsschnitt durch einen dritten erfindungsgemäßen Behälter.

### Ausführliche Beschreibung der Zeichnungen

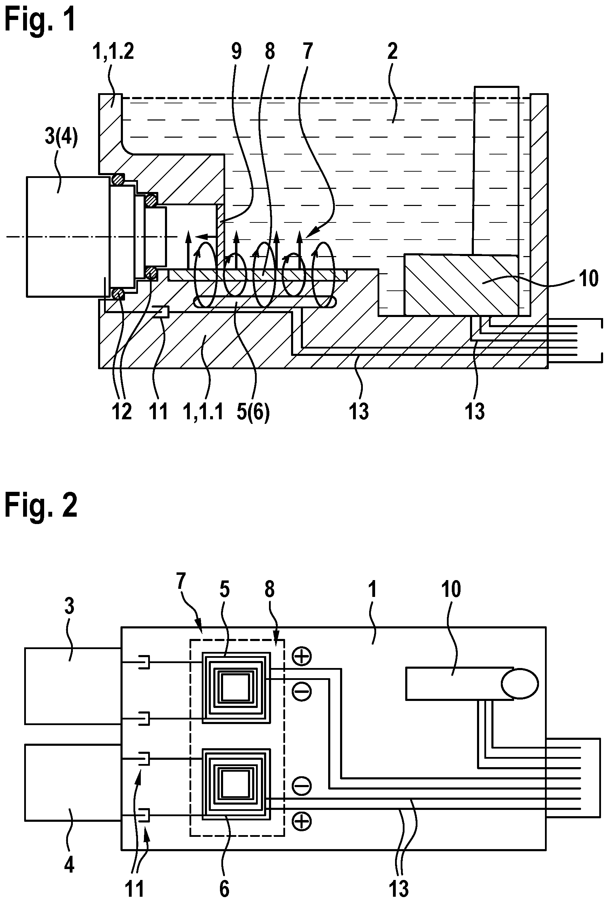

Der Figur 1 ist eine erste bevorzugte Ausführungsform eines erfindungsgemäßen Behälters 1 zu entnehmen. Der Behälter 1 weist ein Speichervolumen 1.3 auf, in dem ein gefrierfähiges Medium 2, beispielsweise Wasser, aufgenommen ist. Das Speichervolumen 1.3 wird von einem Boden 1.1 und Wänden 1.2 des Behälters 1 begrenzt. In einer Wand 1.2 ist ein Ablassventil 3 integriert, bei dem es sich insbesondere um ein Drainventil handeln kann. Diese kann zugleich die Funktion eines Purgeventils übernehmen. Alternativ kann ein weiteres Ablassventil 4 (siehe Bezugszeichen in Klammern) als separates Purgeventil in den Behälter 1 integriert sein. Dichtungen 12 dichten den Anschlussbereich des mindestens einen Ablassventils 3, 4 ab.

Um bei tiefen Umgebungstemperaturen ein Gefrieren des gefrierfähigen Mediums 2 zu verhindern oder bereits gefrorenes Medium 2 aufzutauen, ist eine Heizeinrichtung 7 in den Behälter 1 integriert, die als induktive Heizeinrichtung 7 ausgelegt ist. Die Heizeinrichtung 7 umfasst hierzu mindestens eine Spule 5, die in unmittelbarer Nähe zum Ablassventil 3 in den Boden 1.1 des Behälters 1 integriert ist. Die Spule 5 ist somit durch den Behälter 1 vom Medium 2 getrennt. Dies ist insbesondere von Vorteil, wenn das Medium ein Gas wie Wasserstoff enthalten kann, das sich bei Funkenbildung entzünden kann. Zudem erleichtert die Anordnung der Spule 5 außerhalb des Speichervolumens 1.3 den notwendigen elektrischen Anschluss. Die mindestens eine Spule 5 wirkt auf ein im Speichervolumen 1.3 aufgenommenes Metallteil 8 ein, bei dem es sich um eine auf dem Boden 1.1 angeordnete ferromagnetische Metallplatte handelt. Bei einer Bestromung der Spule 5 erwärmt sich das Metallteil 8 und dieses gibt dann die Wärme an das Medium 2 im Speichervolumen 1.3 ab (siehe Pfeile in der Figur 1).

Die mindestens eine Spule 5 ist mit dem mindestens einen Ablassventil 3 elektrisch in Reihe geschaltet. Dadurch reduziert sich die Anzahl der elektrischen Schnittstellen 11. Eine mögliche Umsetzung einer elektrischen Reihenschaltung ist beispielhaft in der Figur 2 dargestellt.

In der Figur 2 umfasst die induktive Heizeinrichtung 7 mindestens zwei Spulen 5, 6, die nebeneinander angeordnet sind. Jede Spule 5, 6 ist einem Ablassventil 3, 4 zugeordnet. Oberhalb der Spulen 5, 6 ist ein plattenförmiges Metallteil 8 positioniert, das mit Hilfe der Spulen 5, 6 erwärmt werden kann. Der elektrische Anschluss der Spulen 5, 6 erfolgt mittels elektrischer Leiter 13, wobei es sich beispielsweise um Stromschienen handeln kann. Die elektrischen Leiter 13 werden zusammen mit den elektrischen Leitern 13 eines Sensors 10 aus dem Behälter 1 geführt, so dass der Anschluss an eine externe Stromquelle zentral an einer Stelle erfolgen kann. Über elektrische Schnittstellen 11 sind die Spulen 5, 6 mit den Ablassventilen 3, 4 in Reihe geschaltet.

Bei dem Sensor 10 kann es sich insbesondere um einen Füllstandssensor handeln. Ein solcher ist beispielhaft der Figur 1 zu entnehmen. Figur 1 zeigt ferner einen im Speichervolumen 1.3 aufgenommenen Filter 9, der vor dem Ventileinlass des mindestens einen Ablassventils 3 angeordnet ist.

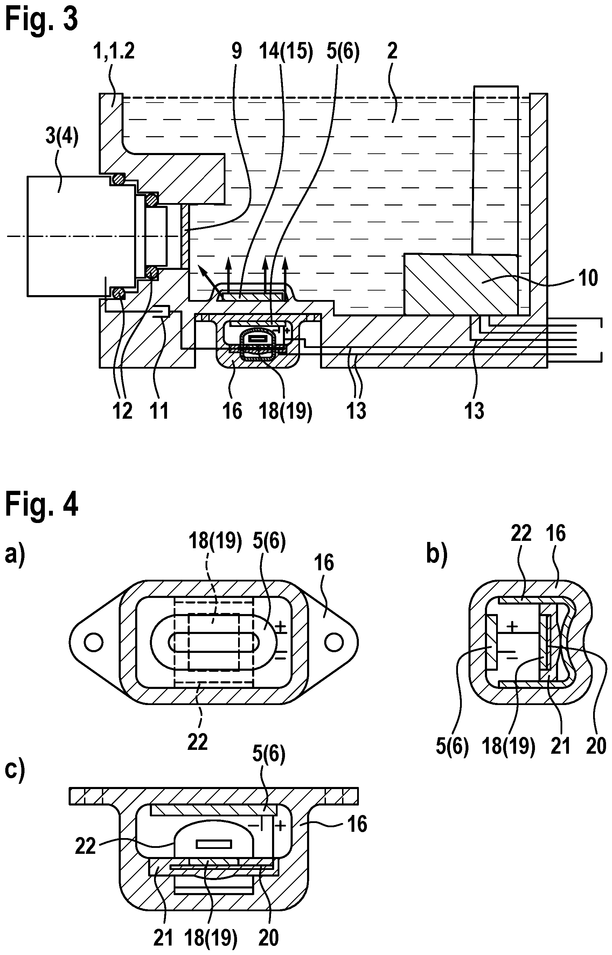

Eine zweite bevorzugte Ausführungsform eines erfindungsgemäßen Behälters 1 ist in der Figur 3 dargestellt. Hier ist die mindestens eine Spule 5, 6 der induktiven Heizeinrichtung 7 über einen Spulenträger 16 mit dem Behälter 1 verbunden. In den Spulenträger 16 ist ferner mindestens ein PTC-Element 18, 19 integriert, das als Widerstandselement dient und ein Überhitzen der mindestens einen Spule 5, 6 verhindern soll. Die mindestens eine Spule 5, 6 kann - analog der Ausführungsform der Figur 1 - mit einem im Speichervolumen 1.3 aufgenommenen Metallteil 8 oder - wie in der Figur 3 dargestellt - mit mindestens einen weiteren Spule 14, 15 zusammenwirken. Die mindestens eine weitere Spule 14, 15 ist zur Reduzierung des Gefahrenpotentials in den Boden 1.1 des Behälters 1 integriert, so dass kein Kontakt zum Medium 2 besteht.

In den Figuren 4a) bis 4c) ist der Spulenträger 16 einschließlich der hierin aufgenommenen Bauteile näher dargestellt. Diese umfassen die mindestens eine Spule 5, 6 sowie das mindestens eine PTC-Element 18, 19. Das mindestens eine PTC-Element 18, 19 ist auf einer Stromschiene 20 angeordnet, über welche die mindestens eine Spule 5, 6 elektrisch kontaktiert ist. Die Stromschiene 20 ist mit einem elektrisch isolierenden Material 21 umspritzt und mittels einer Klammer 22 im Spulenträger 16 gehalten. Sollte das PTC-Element defekt sein, kann es einfach durch Demontage des Spulenträgers 16 ausgetauscht werden.

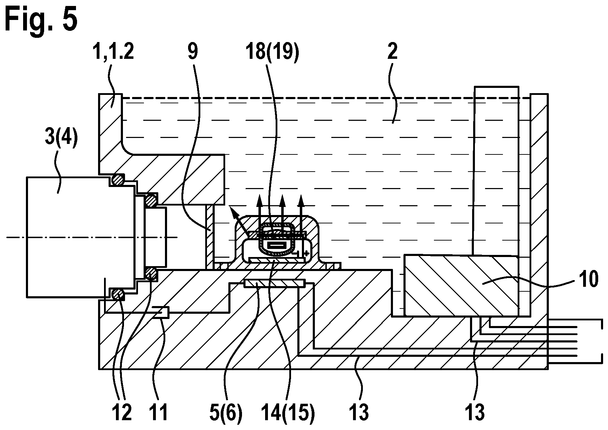

Eine dritte bevorzugte Ausführungsform eines erfindungsgemäßen Behälters 1 ist in der Figur 5 dargestellt. Hier ist - analog der Ausführungsform der Figur 1 - die mindestens eine außerhalb des Speichervolumens 1.3 angeordnete Spule 5, 6 der induktiven Heizeinrichtung 7 in den Boden 1.1 des Behälters 1 integriert und mit dem mindestens eine Ablassventil 3, 4 über elektrische Schnittstellen 11 elektrisch in Reihe geschaltet. Die mindestens eine Spule 5, 6 wirkt mit mindestens einer weiteren Spule 14, 15 zusammen, die gemeinsam mit mindestens einem PTC-Element 18, 19 in einer Kapselung 17 aufgenommen ist, die im Speichervolumen 1.3 des Behälters 1 angeordnet ist. Die Kapselung 17 trennt die mindestens eine weitere Spule 14, 15 sowie das mindestens eine PTC-Element 18, 19 von dem im Speichervolumen 1.3 aufgenommenen Medium 2. Das mindestens eine PTC-Element 18, 19 fungiert hier als Heizelement, das über die Spulen 5, 6, 14, 15 mit Strom versorgt wird.

## Patentansprüche

1. Behälter (1) mit einem Speichervolumen (1.3) zur Aufnahme eines gefrierfähigen Mediums (2), umfassend
- mindestens ein Ablassventil (3, 4) zum Ablassen des Mediums (2) aus dem Behälter (1),
- eine induktive Heizeinrichtung (7) mit mindestens einer Spule (5, 6), wobei die mindestens eine Spule (5, 6) außerhalb des Speichervolumens (1.3) des Behälters (1) angeordnet und mit dem mindestens einen Ablassventil (3, 4) elektrisch in Reihe geschaltet ist.

2. Behälter (1) nach Anspruch 1,
**dadurch gekennzeichnet, dass** die mindestens eine Spule (5, 6) in einen Boden (1.1) oder eine Wand (1.2) des Behälters (1) integriert ist.

3. Behälter (1) nach Anspruch 1,
**dadurch gekennzeichnet, dass** die mindestens eine Spule (5, 6) über einen Spulenträger (16) außen am Behälter (1) befestigt ist.

4. Behälter (1) nach einem der vorhergehenden Ansprüche,
**dadurch gekennzeichnet, dass** die mindestens eine Spule (5, 6) mit einem im Speichervolumen (1.3) des Behälters (1) aufgenommenen, vorzugsweise ferromagnetischen, Metallteil (8) zusammenwirkt.

5. Behälter (1) nach einem der Ansprüche 1 bis 3,
**dadurch gekennzeichnet, dass** die mindestens eine Spule (5, 6) mit mindestens einer weiteren Spule (14, 15) zusammenwirkt, die vorzugsweise in den Behälter (1) integriert und/oder durch eine Kapselung (17) vom Medium (2) getrennt ist.

6. Behälter (1) nach einem der vorhergehenden Ansprüche,
**dadurch gekennzeichnet, dass** die induktive Heizeinrichtung (7) mindestens ein PTC-Element (18, 19) umfasst.

7. Behälter (1) nach Anspruch 6,
**dadurch gekennzeichnet, dass** das mindestens eine PTC-Element (18, 19) die mindestens eine Spule (5, 6) vor Überhitzung sichert und zusammen mit der mindestens einen Spule (5, 6) außerhalb des Speichervolumens (1.3) des Behälters (1) angeordnet ist.

8. Behälter (1) nach Anspruch 6 oder 7,
**dadurch gekennzeichnet, dass** das mindestens eine PTC-Element (18, 19) als Heizelement fungiert und zusammen mit der mindestens einen weiteren Spule (14, 15) durch die Kapselung (17) vom Medium (2) getrennt ist.

9. Wasserabscheider mit einem Behälter (1) nach einem der vorhergehenden Ansprüche.

10. Anodensystem für ein Brennstoffzellensystem, umfassend einen Wasserabscheider nach Anspruch 9, wobei vorzugsweise der Wasserabscheider in einen Anodenkreis des Anodensystems integriert ist, über den ein Brennstoffzellenstapel mit Anodengas, insbesondere mit Wasserstoff, versorgbar ist.
